# EUROPEAN PATENT SPECIFICATION

(11) **EP 3 098 156 B1**
(45) Date of publication and mention of the grant of the patent: **11.04.2018**
(21) Application number: 15754608.6
(22) Date of filing: 06.02.2015
(51) Int. Cl.: B63B 1/38, B63B 1/32

(54) **FRICTIONAL RESISTANCE REDUCTION DEVICE FOR SHIP**
REIBUNGSWIDERSTANDSREDUKTIONSVORRICHTUNG FÜR SCHIFFE
DISPOSITIF DE RÉDUCTION DE LA RÉSISTANCE DE FROTTEMENT POUR NAVIRE

(30) Priority: 28.02.2014 JP 2014039563
(43) Date of publication of application: 30.11.2016
(73) Proprietor: Mitsubishi Heavy Industries, Ltd., Tokyo 108-8215 (JP)
(72) Inventor: KAWAKITA, Chiharu, Tokyo 108-8215 (JP); TAKANO, Shinichi, Tokyo 108-8215 (JP); KUBO, Takehiro, Tokyo 108-8215 (JP); NAGAYAMA, Yoshinori, Tokyo 108-8215 (JP); SATO, Shinsuke, Tokyo 108-8215 (JP); HIGASA, Seijiro, Tokyo 108-8215 (JP); MIZOKAMI, Shuji, Tokyo 108-8215 (JP)
(74) Representative: Henkel, Breuer & Partner
(86) International application number: PCT/JP2015/053407
(87) International publication number: WO 2015/129431

(56) References cited:
- WO-A1-2012/080583
- JP-A- H0 986 484
- JP-A- H08 230 761
- JP-A- H08 244 676
- JP-A- 2010 195 174
- JP-A- 2011 105 185
- JP-A- 2012 066 741
- US-A- 2 145 463

## Description

### Field

The present invention relates to a vessel resistance reduction device that reduces friction resistance acting on a hull of a vessel.

### Background

As a technology of reducing friction resistance acting on a hull of a vessel, there is known a technology of blowing air (bubbles) under water and covering a surface of the hull by the bubbles. For example, there is known a friction resistance reduction type vessel disclosed in JP 2013-018344 A A resistance reduction device is also disclosed in JPH08244676 which represents the closest prior art.

### Summary

### Technical Problem

In the friction resistance reduction type vessel of the above-described related art, air is blown out to the outside from a blowing port provided at a vessel bottom or a vessel side portion. In this case, since energy necessary for an air blowing operation is deducted in a friction resistance reduction effect obtained by the air blowing operation, there is a need to blow air by small energy. In order to obtain a high friction resistance reduction effect, there is a need to devise a system in which air blown out under water is hardly separated from the surface of the hull and is diffused in a wide range.

US 2145463 A discloses a vessel resistance reduction device with a gas chamber provided inside a hull and defined partially by a bottom wall of the hull. To form an air blowing port for blowing air bubbles from the inside of the gas chamber to the outside of the hull and along the bottom wall towards the stern, the bottom wall has an overlapping region of two plates forming the bottom wall. The overlapping portions of the plates in that region are connected by rivets retaining a small gap between the plates, thereby leaving air channels for the air bubbles.

JP H09-86484 A discloses a small planing boat that has a discharge port through which gas is discharged in water formed in the part, forming a water surface, of the bottom of the small planing boat to reduce the frictional resistance at the bottom. Gas is guided to the discharge port by means of a discharge duct, and is discharged between the bottom wall and an external water flow through a gap formed at the port between a lug protruding obliquely outward beyond the outer surface of the bottom wall and a further lug that is bent inward.

WO 2012/080583 A1 discloses a vessel resistance reduction device with a gas chamber provided inside a hull and defined partially by a bottom wall of the hull. To form an air blowing port for blowing air bubbles from the inside of the gas chamber to the outside of the hull and along the bottom wall towards the stern, the bottom wall has rounded half-shells formed on the outside face of the bottom wall so as to each surround a hole in the bottom wall and project to the outside of the hull.

The present invention is made to solve the above-described problems and an object of the present invention is to provide a vessel resistance reduction device capable of improving a friction resistance reduction effect.

### Solution to Problem

To achieve the above-described object, a vessel resistance reduction device according to the present invention comprises the features of claim 1, including:
a gas chamber provided inside a hull;
a defining wall which defines an inside of the gas chamber and an outside of the hull;
an air blowing port provided at the defining wall; and
a guide member provided at a rear side of the hull in the air blowing port.

Thus, since the air blown out under water outside the hull through the air blowing port from the gas chamber flows toward the rear side of the hull by the guide member so that the air is not easily separated from the outer face of the hull and is diffused in a wide range, the surface of the hull can be appropriately covered by bubbles. As a result, a friction resistance reduction effect can be improved.

In the vessel resistance reduction device according to the present invention, the guide member includes a first guide plate provided near the gas chamber in the defining wall to block a part of the air blowing port.

Thus, when the air of the gas chamber is blown out under water outside the hull through the air blowing port, the air is drawn to a space portion between the first guide plate and an end face of the air blowing port and thus the air can flow along the outer face of the hull with high efficiency.

In the vessel resistance reduction device according to the present invention, a plurality of the air blowing ports are preferably provided at a predetermined interval along a width direction of the hull and the first guide plate blocks a part of the plurality of air blowing ports.

Thus, since the first guide plate is provided across the plurality of air blowing ports, a structure can be simplified and a manufacture cost can be decreased.

The vessel resistance reduction device according to the present invention preferably comprises:
an air supply device which supplies air into the gas chamber,
wherein the air supply device includes a bubble generation chamber, a water intake passage which takes water into the bubble generation chamber, an air intake passage which takes air into the bubble generation chamber, an impeller rotatable under the water of the bubble generation chamber, and a bubble supply passage which supplies bubbles generated in the bubble generation chamber to the gas chamber.

Thus, when the impeller rotates under water while the bubble generation chamber takes water from the water intake passage and takes air from the air intake passage, the air is drawn into the water to be shredded so that micro bubbles are formed. Then, the micro bubbles are supplied from the bubble supply passage to the gas chamber and are blown out under water outside the hull along with the water while the micro bubbles pass through the air blowing port from the gas chamber. For that reason, since the air can appropriately flow along the outer face of the hull, the friction resistance reduction effect can be improved.

In the vessel resistance reduction device according to the present invention, the impeller preferably includes a boss portion and a plurality of vanes which are disposed at the outside of the boss portion, one end of a horizontal shaft portion is connected to the boss portion, and a driving motor is connected to the shaft portion.

Thus, since the air is drawn into water to be shredded by the rotation of the impeller, micro bubbles can be formed with high efficiency.

In the vessel resistance reduction device according to the present invention, the impeller preferably includes the plurality of vanes which extend radially from the boss portion and an outer race disposed at the outside of the plurality of vanes.

Thus, the plurality of vanes can be appropriately supported by the boss portion and the outer race.

In the vessel resistance reduction device according to the present invention, the impeller preferably includes a support member that extends in a radial direction from the boss portion and an outer race disposed at the outside of the support member and the support member is provided with the plurality of vanes.

Thus, since the outer race is supported by the boss portion through the support member and the support member is provided with the plurality of vanes, the plurality of vanes can be appropriately supported.

In the vessel resistance reduction device according to the present invention, the plurality of vanes are preferably provided with a plurality of holes for further forming micro bubbles.

Thus, since the vane is provided with the plurality of holes, micro bubbles can be further formed.

In the vessel resistance reduction device according to the present invention, the bubble generation chamber is preferably disposed above a waterline.

Thus, since the bubble generation chamber is disposed above a waterline, there is no need to use power necessary to take air from the air intake passage into the bubble generation chamber and thus a structure can be simplified.

In the vessel resistance reduction device according to the present invention, preferably, the bubble generation chamber which is the gas chamber is disposed at an inner face of the defining wall, a water intake opening which is the water intake passage is formed at the defining wall, and the air blowing port which is the bubble supply passage is formed at the rear side of the hull in relation to the water intake opening in the defining wall.

Thus, since the defining wall is provided with the water intake opening and the air blowing port, there is no need to use power necessary to take water from the water intake opening into the bubble generation chamber and thus a structure can be simplified.

In the vessel resistance reduction device according to the present invention, a weir is preferably provided under water at a position between the water intake opening and a group of the impeller and the air blowing port.

Thus, it is possible to appropriately blow out micro bubbles under water from the air blowing port by preventing the formed micro bubbles from being discharged from the water intake opening.

In the vessel resistance reduction device according to the present invention, the air blowing port of the bubble supply passage is preferably provided with a first guide plate which extends to be inclined downward in a bubble blowing direction.

Thus, since the bubbles are appropriately blown out from the air blowing port by the first guide plate, the air can appropriately flow along the outer face of the hull.

In the vessel resistance reduction device according to the present invention, the water intake opening of the water intake passage preferably includes a second guide plate which extends to be inclined downward as it goes toward the front side of the hull.

Thus, the water can be taken from the water intake opening by the second guide plate with high efficiency.

### Advantageous Effects of Invention

According to the vessel resistance reduction device of the present invention, it is possible to improve the friction resistance reduction effect by appropriately covering the surface of the hull by bubbles. Brief Description of Drawings
FIG. 1 is a schematic side view illustrating a vessel equipped with a vessel resistance reduction device of a first embodiment.
FIG. 2 is a schematic bottom view illustrating the vessel equipped with the vessel resistance reduction device.
FIG. 3 is a schematic diagram illustrating a configuration in which air blowing ports are disposed in a bottom face.
FIG. 4 is a cross-sectional view illustrating a vessel bottom with the air blowing ports.
FIG. 5 is a front view illustrating the vessel bottom with the air blowing ports.
FIG. 6 is a front view illustrating a vessel bottom with air blowing ports of a modified example of the first embodiment.
FIG. 7 is a side view illustrating a vessel equipped with a vessel resistance reduction device of a second embodiment.
FIG. 8 is a schematic configuration diagram illustrating an air supply device.
FIG. 9 is a schematic diagram illustrating an impeller.
FIG. 10 is a side view illustrating a vessel equipped with a vessel resistance reduction device of a third embodiment.
FIG. 11 is a side view illustrating a vessel equipped with a vessel resistance reduction device of a fourth embodiment.
FIG. 12 is a schematic configuration diagram illustrating an air supply device.
FIG. 13 is a schematic configuration diagram illustrating a modified example of the air supply device.
FIG. 14 is a front view illustrating a first modified example of the impeller.
FIG. 15-1 is a cross-sectional view illustrating the impeller.
FIG. 15-2 is a cross-sectional view illustrating the impeller.
FIG. 15-3 is a cross-sectional view illustrating the impeller.
FIG. 16 is a front view illustrating a second modified example of the impeller.
FIG. 17-1 is a cross-sectional view illustrating the impeller.
FIG. 17-2 is a cross-sectional view illustrating the impeller.
FIG. 17-3 is a cross-sectional view illustrating the impeller.
FIG. 18 is a front view illustrating a third modified example of the impeller.
FIG. 19 is a cross-sectional view illustrating the impeller.
FIG. 20 is a front view illustrating a fourth modified example of the impeller.
FIG. 21-1 is a cross-sectional view illustrating the impeller.
FIG. 21-2 is a cross-sectional view illustrating the impeller.

### Description of Embodiments

Hereinafter, a preferred embodiment of a vessel resistance reduction device according to the present invention will be described in detail with reference to the accompanying drawings. Further, the present invention is not limited to the embodiment and also includes a combination of a plurality of embodiments in the case of the plurality of embodiments.

### [First Embodiment]

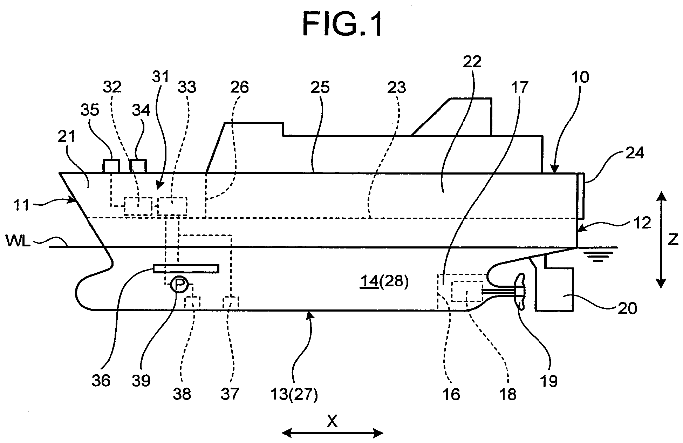

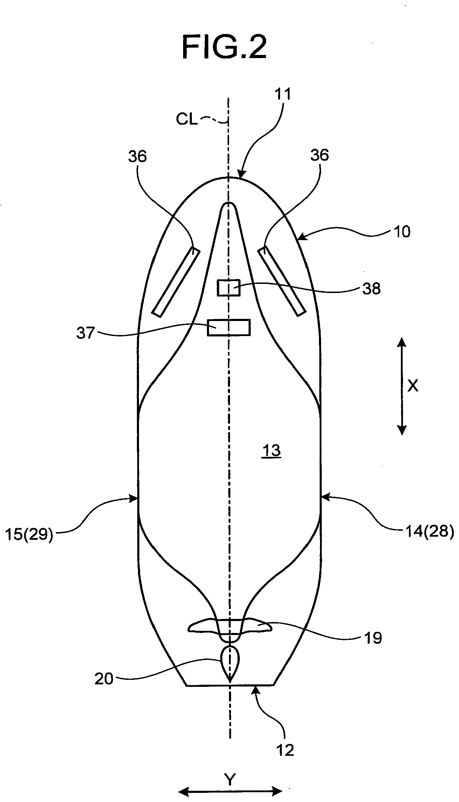

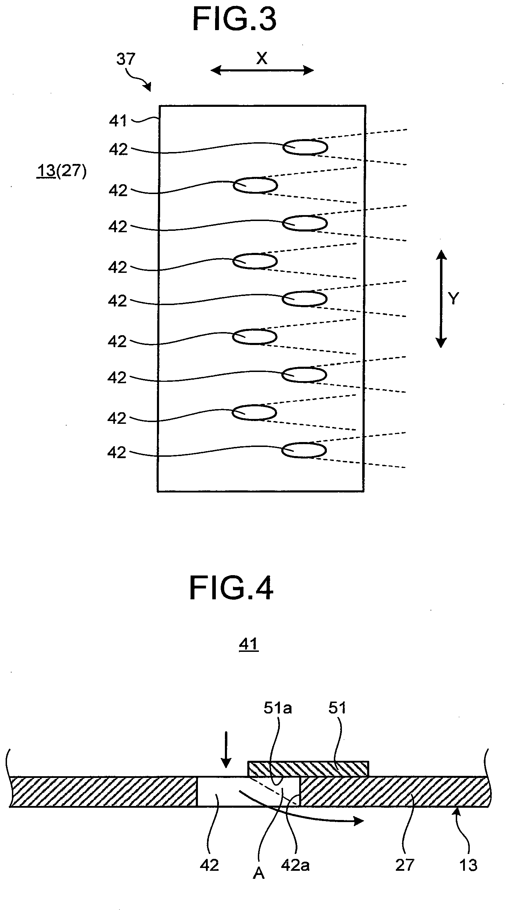

FIG. 1 is a schematic side view illustrating a vessel equipped with a vessel resistance reduction device of a first embodiment, FIG. 2 is a schematic bottom view illustrating the vessel equipped with the vessel resistance reduction device, and FIG. 3 is a schematic diagram illustrating a configuration in which air blowing ports are disposed in a bottom face.

A vessel equipped with the vessel resistance reduction device of the first embodiment is, for example, a passenger vessel (a car ferry) as illustrated in FIGS. 1 and 2 and a hull 10 includes a bow 11, a stern 12, a vessel bottom 13, a port (a vessel side portion) 14, and a starboard (a vessel side portion) 15. In the present embodiment, a vessel length direction (an anteroposterior direction) of the hull 10 indicates an X direction, a vessel width direction (a width direction) thereof indicates a Y direction, and a vessel height direction (a vertical direction) indicates a Z direction. Then, "CL" indicates a center line of the hull 10 and "WL" indicates a full load waterline of the hull 10.

The hull 10 includes an engine room 17 defined near the stern 12 by a partition wall 16 and a main engine (for example, a diesel engine) 18 is disposed in the engine room 17. A propeller 19 that transmits propelling force is driving-coupled to the main engine 18. Further, the hull 10 includes a rudder 20 provided at the stern 12 to control a direction of the hull 10.

Further, the hull 10 includes an air supply equipment chamber 21, a hold 22, a vehicle deck 23, a ramp 24, an exposed deck portion 25, a partition wall 26, a vessel bottom shell plate 27, and vessel side shell plates 28 and 29. The air supply equipment chamber 21 is disposed near the bow 11 in relation to the hold 22. The air supply equipment chamber 21 and the hold 22 are defined by the partition wall 26. The vehicle deck 23 forms floor faces of the air supply equipment chamber 21 and the hold 22. The ramp 24 is used for an automobile (not illustrated) to get on and off the hold 22. The exposed deck portion 25 is, for example, an upper deck of the bow 11 and is disposed above the air supply equipment chamber 21.

The resistance reduction device 31 includes an air supply device 32, an air cooler 33, a ventilation cylinder 34, an air suction port 35, an air blowing portion 36, an air blowing portion 37, a sea water intake portion 38, and a pump 39. The air blowing portion 36 is disposed at each of the port 14 (the vessel side shell plate 28) and the starboard 15 (the vessel side shell plate 29). The air blowing portion 37 and the sea water intake portion 38 are disposed at the vessel bottom 13 (the vessel bottom shell plate 27) near the bow 11. The air supply device 32 and the air cooler 33 are provided at the air supply equipment chamber 21. The ventilation cylinder 34 and the air suction port 35 are disposed at the exposed deck portion 25. The ventilation cylinder 34 communicates with the air supply equipment chamber 21 and is used to ventilate the air supply equipment chamber 21. The air suction port 35 is connected to the air supply device 32. The air supply device 32 is connected to air blowing portions 36 and 37 through the air cooler 33. The sea water intake portion 38 is connected to the air cooler 33 through the pump 39.

The sea water intake portion 38 and the air blowing portion 37 are disposed on, for example, the center line CL of the hull 10 and are disposed at a flat portion of the vessel bottom shell plate 27 of the vessel bottom 13. The sea water intake portion 38 is disposed near the bow 11 in relation to the air blowing portion 37. The air blowing portions 36 are disposed at each of the vessel side shell plates 28 and 29 of the port 14 and the starboard 15 near the bow 11. The air blowing portions 36 are disposed to be symmetrical to each other with respect to the center line CL and are disposed while being inclined so that the air blowing portions move closer to each other as it goes toward the bow 11. The sea water intake portion 38 is disposed between the air blowing portions 36 provided at the port 14 and the starboard 15.

The air supply device 32 pressurizes air suctioned from the air suction port 35 and supplies the pressurized air from the air cooler 33 to the air blowing portions 36 and 37. The pump 39 supplies sea water taken from the sea water intake portion 38 to the air cooler 33. The air cooler 33 cools the pressurized air by using the sea water. The air cooler 33 is, for example, a heat exchanger that exchanges heat between the pressurized air and the sea water. Alternatively, the air cooler 33 may be configured to cool the pressurized air by spraying the sea water into the pressurized air or may be configured to cool the pressurized air by blowing the pressurized air into the sea water. The air blowing portions 36 and 37 blow the pressurized air supplied from the air supply device 32 under water. That is, air is blown out under water from the air blowing portions 36 and 37 of the hull 10 and bubbles formed by the blown out air are sent to the flat portion of the vessel bottom 13 so that the hull 10 is covered by the bubbles. Accordingly, friction resistance of the hull 10 is reduced.

Further, the air blowing portion 37 disposed at the vessel bottom 13 near the bow 11 includes, as illustrated in FIG. 3, a gas chamber 41 provided inside the hull 10, the vessel bottom shell plate 27 which serves as a defining wall defining the inside of the gas chamber 41 and the outside of the hull 10, and a plurality of air blowing ports 42 which are provided at the vessel bottom shell plate 27. The gas chamber 41 is a sealed space portion and the air supply device 32 is connected thereto through the air cooler 33. The plurality of air blowing ports 42 are passages which penetrate the vessel bottom shell plate 27 from the gas chamber 41 so that a gas flows to the outside of the hull 10, that is, under water therethrough. The plurality of air blowing ports 42 are disposed in two rows in the width direction and the anteroposterior direction of the vessel bottom 13. That is, the plurality of air blowing ports 42 are disposed in a zigzag shape at the vessel bottom 13. For that reason, the pressurized air blown out under water from the plurality of air blowing ports 42 becomes bubbles and the bubbles are diffused in the width direction of the vessel bottom 13 while flowing backward along the flat portion thereof.

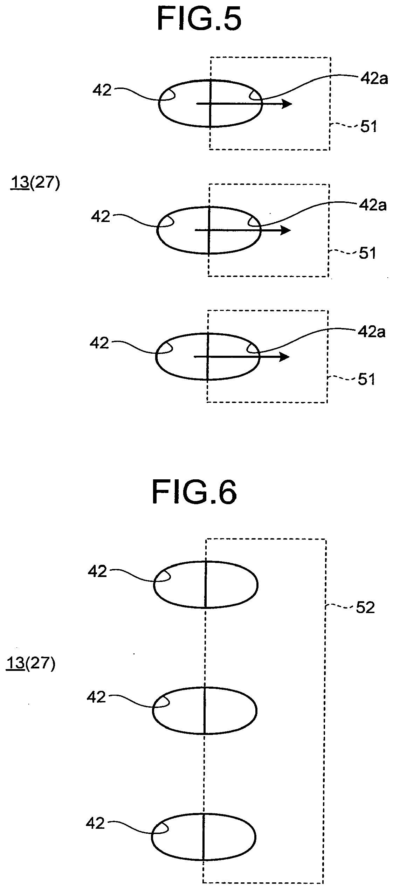

Here, the configuration of the air blowing port 42 will be described in detail. FIG. 4 is a cross-sectional view illustrating the vessel bottom with the air blowing ports and FIG. 5 is a front view illustrating the vessel bottom with the air blowing ports.

As illustrated in FIGS. 4 and 5, the air blowing port 42 is formed in an elongated elliptical shape along the anteroposterior direction of the hull 10 (a traveling direction of the vessel) and penetrates the vessel bottom shell plate 27 as a defining wall in a vertical direction. Here, the air blowing port is provided at a plurality of positions at a predetermined interval in the width direction of the hull 10. A first guide plate 51 that is a guide member is provided at the rear side of the hull 10 in the air blowing port 42. The first guide plate 51 is provided near the gas chamber 41 in the vessel bottom shell plate 27 to block a part of the air blowing port 42.

That is, the first guide plate 51 is a rectangular plate member and is formed to have a thickness (for example, 1 to 5 mm and desirably 1 to 2 mm) thinner than a thickness of (for example, 30 to 40 mm) of the vessel bottom shell plate 27. The first guide plate 51 is fixed to the vessel bottom shell plate 27 near the gas chamber 41, that is, an inner face of the vessel bottom shell plate 27 by welding. The first guide plate 51 is disposed to block the air blowing port 42 near the stern 12 (a right side in FIGS. 4 and 5). In this case, it is desirable that the first guide plate 51 be disposed to block an area equal to or smaller than a half of an opening area of the air blowing port 42.

Air supplied to the gas chamber 41 is blown out under water from the plurality of air blowing ports 42 to become bubbles and the bubbles flow along the flat portion of the vessel bottom 13 toward the rear side of the hull 10. At this time, since a part of the rear side of the air blowing port 42 is blocked by the first guide plate 51 from the inside, an air stagnation portion A is formed in a space portion between a rear end face 42a of the air blowing port 42 and a lower face 51a of the first guide plate 51. For that reason, air blown out under water from the air blowing port 42 is drawn to the stagnation portion A and the drawn air flows backward while not being separated from the lower face of the vessel bottom shell plate 27, that is, the outer face of the vessel bottom 13 so that the surface of the hull 10 can be appropriately covered by bubbles.

Additionally, the configuration of the first guide plate 51 is not limited to the above-described configuration. FIG. 6 is a front view illustrating a vessel bottom with air blowing ports of a modified example of the first embodiment.

As illustrated in FIG. 6, the air blowing port 42 is formed in an elongated elliptical shape along the anteroposterior direction of the hull 10 and the air blowing port is provided at a plurality of positions at a predetermined interval in the width direction of the hull 10. In each of the plurality of air blowing ports 42, a first guide plate 52 that is a guide member is provided at the rear side of the hull 10. The first guide plate 52 is provided near the gas chamber 41 in the vessel bottom shell plate 27 to block a part of each air blowing port 42. Further, since the action of the first guide plate 52 is the same as that of the first guide plate 51, the description thereof will be omitted.

Here, the air blowing portion 37 disposed in the vessel bottom 13 has been described, but the air blowing portion 36 also has the same configuration as that of the port 14 (the vessel side shell plate 28) or the starboard 15 (the vessel side shell plate 29).

In this way, the vessel resistance reduction device of the first embodiment is provided with the gas chamber 41 provided inside the hull 10, the vessel bottom shell plate 27 which serves as the defining wall defining the inside of the gas chamber 41 and the outside of the hull 10, the air blowing port 42 provided at the vessel bottom shell plate 27, and the first guide plates 51 and 52 which serve as the guide members provided at the rear side of the hull 10 in the air blowing port 42.

Thus, air blown out under water from the gas chamber 41 to the outside of the hull through the air blowing port 42 flows toward the rear side of the hull 10 by the first guide plates 51 and 52 so that the air is not easily separated from the outer face of the hull 10. Accordingly, when the surface of the hull 10 is appropriately covered by bubbles, a friction resistance reduction effect can be improved.

In the vessel resistance reduction device of the first embodiment, the first guide plates 51 and 52 are provided near the gas chamber 41 in the vessel bottom shell plate 27 to block a part of the air blowing port 42. Thus, when the air of the gas chamber 41 is blown out under water outside the hull through the air blowing port 42, the air is drawn toward the stagnation portion A between each of the first guide plates 51 and 52 and the end face of the air blowing port 42 and thus the air can highly efficiently flow along the outer face of the hull 10.

In the vessel resistance reduction device of the first embodiment, the plurality of air blowing ports 42 are provided at a predetermined interval along the width direction of the hull 10 and the first guide plate 52 is used to block a part of the plurality of air blowing ports 42. Thus, since the first guide plate 52 is provided across the plurality of air blowing ports 42, a structure can be simplified and a manufacture cost can be decreased.

### [Second Embodiment]

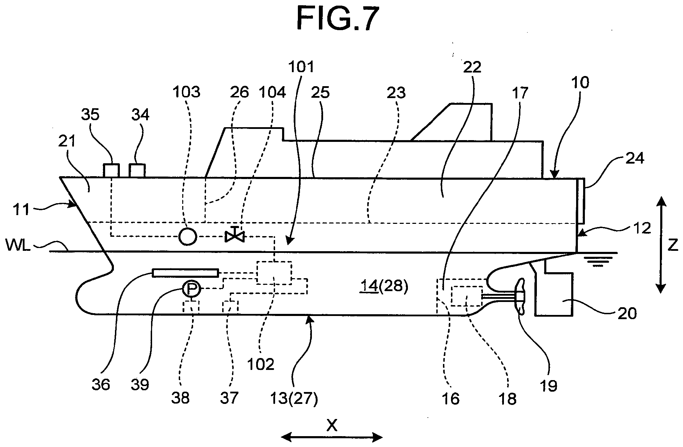

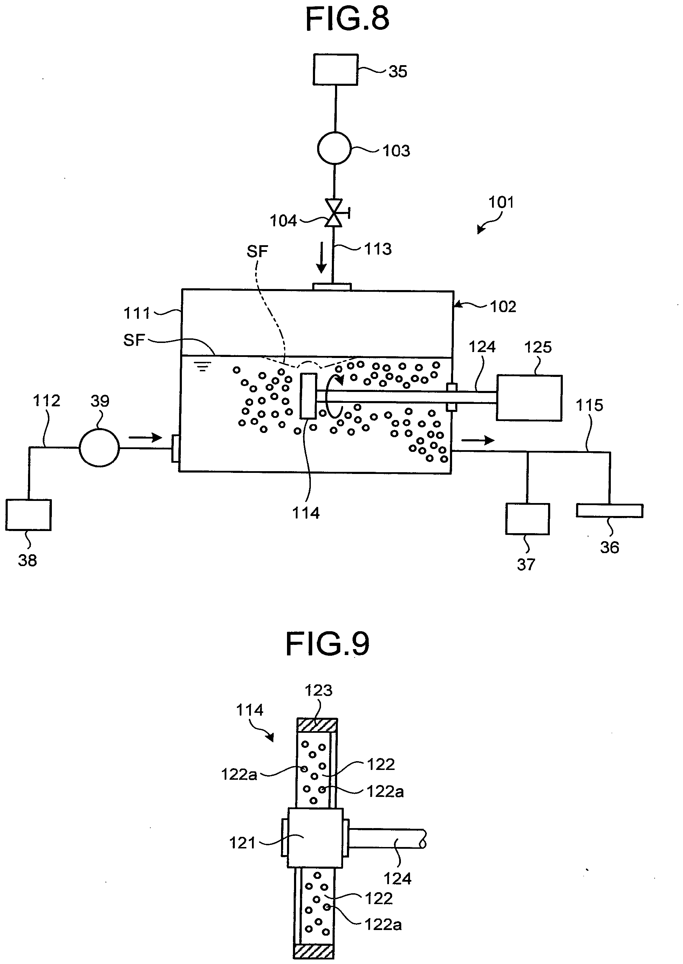

FIG. 7 is a side view illustrating a vessel equipped with a vessel resistance reduction device of a second embodiment, FIG. 8 is a schematic configuration diagram illustrating an air supply device, and FIG. 9 is a schematic diagram illustrating an impeller. Further, the same reference signs will be given to the components having the same functions as those of the above-described embodiment and the detailed description thereof will be omitted.

In the vessel resistance reduction device of the second embodiment, as illustrated in FIG. 7, a resistance reduction device 101 includes an air supply device 102, the air suction port 35, the air blowing portion 36, the air blowing portion 37, the sea water intake portion 38, the pump 39, a blower 103, and an opening and closing valve 104.

The air supply device 102 is provided on a deck in a space portion lower than the waterline WL. The air suction port 35 is disposed at the exposed deck portion 25 and is connected to the air supply device 102 through the blower 103 and the opening and closing valve 104. The air supply device 102 is connected to the air blowing portions 36 and 37. The sea water intake portion 38 is connected to the air supply device 102 through the pump 39.

The air supply device 102 is used to supply air into the gas chambers of the air blowing portions 36 and 37 and includes, as illustrated in FIG. 8, a bubble generation chamber 111, a water intake passage 112, an air intake passage 113, an impeller 114, and a bubble supply passage 115. The bubble generation chamber 111 is a sealed container having a predetermined volume. The water intake passage 112 is a passage through which sea water is taken into the bubble generation chamber 111 and the pump 39 is attached to the passage. Here, one end portion of the passage is connected to the sea water intake portion 38 and the other end portion thereof is connected to the lower portion of the bubble generation chamber 111. The air intake passage 113 is a passage through which air is taken into the bubble generation chamber 111 and the blower 103 and the opening and closing valve 104 are attached to the passage. Here, one end portion of the passage is connected to the air suction port 35 and the other end portion thereof is connected to the upper portion of the bubble generation chamber 111.

The impeller 114 is rotatable inside the sea water of the bubble generation chamber 111 and is used to form micro bubbles by taking air into the sea water. The impeller 114 includes, as illustrated in FIG. 9, a boss portion 121, a plurality of vanes 122 which extend radially from the boss portion 121, and an outer race 123 disposed at the outside of the plurality of vanes 122. The plurality of vanes 122 are disposed at a predetermined angle in a circumferential direction and are inclined in an axis direction of the boss portion 121. Further, the vane 122 is provided with a plurality of holes 122a. One end portion of a horizontal shaft portion 124 is connected to the boss portion 121 and the other end portion of the shaft portion 124 extends to the outside of the bubble generation chamber 111 to be connected to a driving motor 125.

Further, as illustrated in FIG. 8, the bubble supply passage 115 is used to supply bubbles generated in the bubble generation chamber 111 to the gas chambers of the air blowing portions 36 and 37. Here, one end portion of the passage is connected to the air blowing portions 36 and 37 and the other end portion thereof is connected to the lower portion of the bubble generation chamber 111.

For that reason, the blower 103 pressurizes air suctioned from the air suction port 35 while the opening and closing valve 104 is opened and supplies the pressurized air from the air intake passage 113 to the bubble generation chamber 111. Further, the pump 39 supplies the sea water taken from the sea water intake portion 38 from the water intake passage 112 to the bubble generation chamber 111. Then, the bubble generation chamber 111 stores the sea water at the lower portion thereof and charges the air at the upper portion thereof. In addition, when an opening degree of the opening and closing valve 104 is adjusted so that the impeller 114 is located in the sea water, a ratio of the air in the sea water in the bubble generation chamber 111 is adjusted.

In this state, when the impeller 114 rotates under the sea water in the bubble generation chamber 111 while the upper air is drawn into the sea water so that a part of a sea level SF falls and the air drawn into the sea water is shredded, micro bubbles is formed. Then, the micro bubbles are supplied from the bubble supply passage 115 to the air blowing portions 36 and 37 and are blown out under water outside the hull through the air blowing port. That is, air is blown out under water from the air blowing portions 36 and 37 of the hull 10 and bubbles formed by the blown air are sent to the flat portion of the vessel bottom 13 so that the hull 10 is covered by the bubbles. As a result, the friction resistance of the hull 10 is reduced.

In this way, the vessel resistance reduction device of the second embodiment is provided with the air supply device 102 which supplies air to the air blowing portions 36 and 37. Then, the air supply device 102 includes the bubble generation chamber 111, the water intake passage 112 which takes water into the bubble generation chamber 111, the air intake passage 113 which takes air into the bubble generation chamber 111, the impeller 114 rotatable inside the sea water of the bubble generation chamber 111, and the bubble supply passage 115 which supplies bubbles generated inside the bubble generation chamber 111 to the air blowing portions 36 and 37.

Thus, when the impeller 114 rotates under the sea water while the bubble generation chamber 111 takes water from the water intake passage 112 and takes air from the air intake passage 113, the air is drawn into the sea water and thus micro bubbles is formed. Then, the generated micro bubbles are supplied from the bubble supply passage 115 to the air blowing portions 36 and 37 and are blown out under water outside the hull through the air blowing port. For that reason, since the air can appropriately flow along the outer face of the hull 10, the friction resistance reduction effect can be improved.

In the vessel resistance reduction device of the second embodiment, the impeller 114 includes the boss portion 121, the plurality of vanes 122 which extend radially from the boss portion 121, and the outer race 123 disposed at the outside of the plurality of vanes 122. Here, one end of the horizontal shaft portion 124 is connected to the boss portion 121 and the other end of the shaft portion 124 extends to the outside of the bubble generation chamber 111 to be connected to the driving motor 125. Thus, since the air is drawn into water and is shredded by the rotation of the impeller 114, micro bubbles can be formed with high efficiency.

### [Third Embodiment]

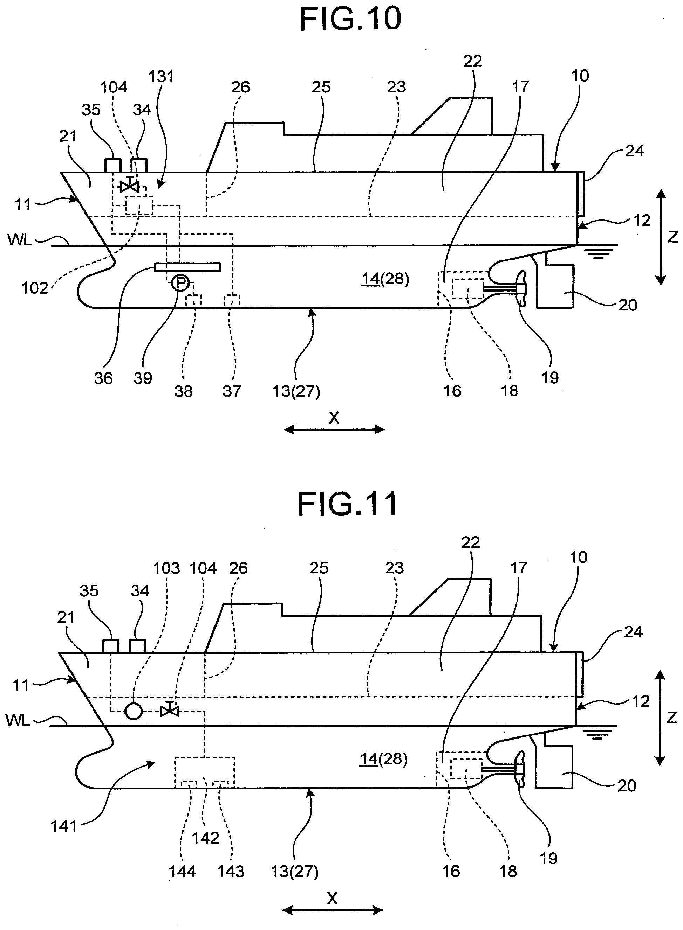

FIG. 10 is a side view illustrating a vessel equipped with a vessel resistance reduction device of a third embodiment. Further, the same reference signs will be given to the components having the same functions as those of the above-described embodiment and the detailed description thereof will be omitted.

In the vessel resistance reduction device of the third embodiment, as illustrated in FIG. 10, a resistance reduction device 131 includes the air supply device 102, the air suction port 35, the air blowing portion 36, the air blowing portion 37, the sea water intake portion 38, the pump 39, and the opening and closing valve 104. Then, the air supply device 102 has substantially the same configuration as that of the above-described eighth embodiment, but is provided on a deck of a space portion higher than the waterline WL. For that reason, the air intake passage 113 that connects the air suction port 35 and the air supply device 102 to each other may have only the opening and closing valve 104 and does not need the blower.

Additionally, since the action of the resistance reduction device 131 is the same as that of the second embodiment, the description thereof will be omitted.

In this way, the vessel resistance reduction device of the third embodiment includes the air supply device 102, the air suction port 35, the air blowing portion 36, the air blowing portion 37, the sea water intake portion 38, the pump 39, and the opening and closing valve 104 and the air supply device 102 is disposed above the waterline WL. Thus, since there is no need to use power necessary to take air from the air intake passage 113 into the bubble generation chamber 111, a structure can be simplified.

### [Fourth Embodiment]

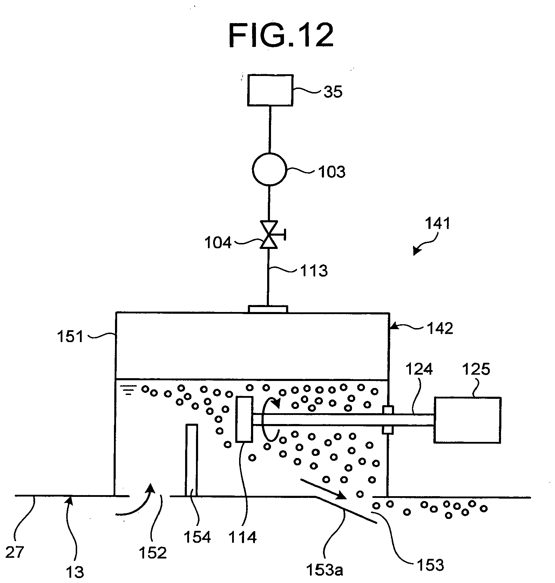

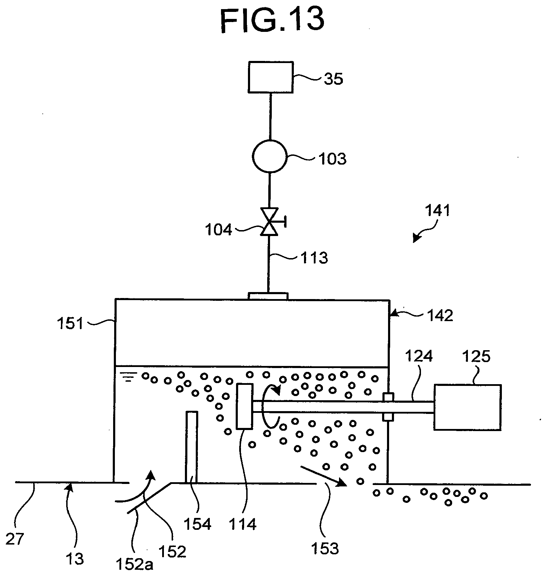

FIG. 11 is a side view illustrating a vessel equipped with a vessel resistance reduction device of a fourth embodiment, FIG. 12 is a schematic configuration diagram illustrating an air supply device, and FIG. 13 is a schematic configuration diagram illustrating a modified example of the air supply device. Further, the same reference signs will be given to the components having the same functions as those of the above-described embodiment and the detailed description thereof will be omitted.

In the vessel resistance reduction device of the fourth embodiment, as illustrated in FIG. 11, a resistance reduction device 141 includes an air supply device 142, the air suction port 35, an air blowing portion 143, a sea water intake portion 144, the blower 103, and the opening and closing valve 104.

The air supply device 142 is provided on a deck of the vessel bottom 13 lower than the waterline WL. The air suction port 35 is disposed at the exposed deck portion 25 and is connected to the air supply device 142 through the blower 103 and the opening and closing valve 104. The air blowing portion 143 and the sea water intake portion 144 are provided at the lower portion of the air supply device 142.

The air supply device 142 includes, as illustrated in FIG. 12, a bubble generation chamber 151, a water intake opening (a water intake passage) 152, the air intake passage 113, the impeller 114, and an air blowing port (a bubble supply passage) 153. The bubble generation chamber 151 serves as a gas chamber and is a sealed container having a predetermined volume. The water intake opening 152 constituting the sea water intake portion 144 is a passage that takes sea water into the bubble generation chamber 151 and is formed at the vessel bottom shell plate 27 of the vessel bottom 13. The air blowing port 153 constituting the air blowing portion 143 is used to blow out bubbles generated inside the bubble generation chamber 151 into sea and forms a nozzle by extending the first guide plate 153a so that the first guide plate is inclined into water at the lower side of the bubble blowing direction. For that reason, air can appropriately flow along the outer face of the hull by the first guide plate 153a of the air blowing port 153.

Further, the bubble generation chamber 151 includes a weir 154 provided under water at a position between the water intake opening 152 and a group of the impeller 114 and the air blowing port 153.

For that reason, the blower 103 pressurizes air suctioned from the air suction port 35 and supplies the pressurized air from the air intake passage 113 to the bubble generation chamber 151 while the opening and closing valve 104 is opened. Further, sea water is taken from the water intake opening 152 and is supplied to the bubble generation chamber 151. Then, when the impeller 114 rotates under the sea water in the bubble generation chamber 151 in this state, the upper air is drawn into the sea water and is shredded so that micro bubbles are formed. Then, the micro bubbles are blown out under water outside the hull through the air blowing port 153.

That is, since a negative pressure is generated in the nozzle of the air blowing port 153, the bubbles and the sea water inside the bubble generation chamber 151 are ejected to the outside. For that reason, the sea water is taken from the water intake opening 152 into the bubble generation chamber 151. Further, since the weir 154 is provided between the water intake opening 152 and a group of the impeller 114 and the air blowing port 153, the bubbles formed by the rotation of the impeller 114 do not flow toward the water intake opening 152 and the sea water taken from the water intake opening 152 does not directly flow to the air blowing port 153. Then, air is blown out under water from the air blowing port 153 of the hull 10, bubbles formed by the blown air are sent to the flat portion of the vessel bottom 13, and the hull 10 is covered by the bubbles, thereby reducing the friction resistance of the hull 10.

Further, the air supply device 142 of the present embodiment is not limited to this configuration. That is, as illustrated in FIG. 13, the water intake opening 152 is a passage through which sea water is taken into the bubble generation chamber 151 and is formed at the vessel bottom shell plate 27 of the vessel bottom 13. The water intake opening 152 is provided with a second guide plate 152a which extends to be inclined downward as it goes toward the front side of the hull 10. For that reason, water can be taken from the water intake opening 152 by the second guide plate 152a with high efficiency.

In this way, in the vessel resistance reduction device of the tenth embodiment, the bubble generation chamber 151 is disposed as a gas chamber, the water intake opening 152 which is a water intake passage is provided at the bubble generation chamber 151, and the air blowing port 153 which is a bubble supply passage is provided at the rear side of the hull 10 in relation to the water intake opening 152.

Thus, since the vessel bottom shell plate 27 is provided with the water intake opening 152 and the air blowing port 153, there is no need to use power necessary to take water into the bubble generation chamber 151 and thus a structure can be simplified.

In the vessel resistance reduction device of the tenth embodiment, the weir 154 is provided under water at a position between the water intake opening 152 and a group of the impeller 114 and the air blowing port 153. Thus, since it is possible to prevent the formed micro bubbles from being discharged from the water intake opening 152, it is possible to appropriately blow out the micro bubbles from the air blowing port 153.

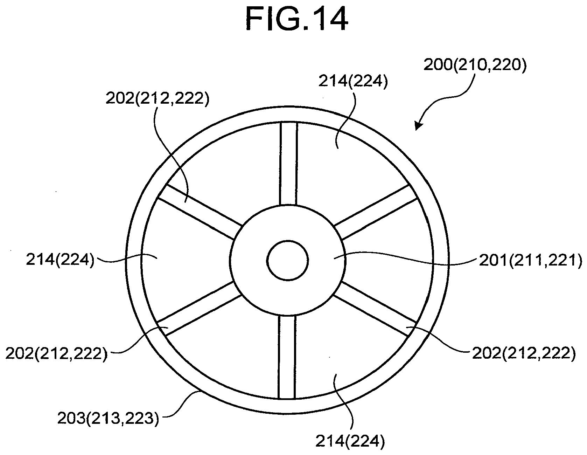

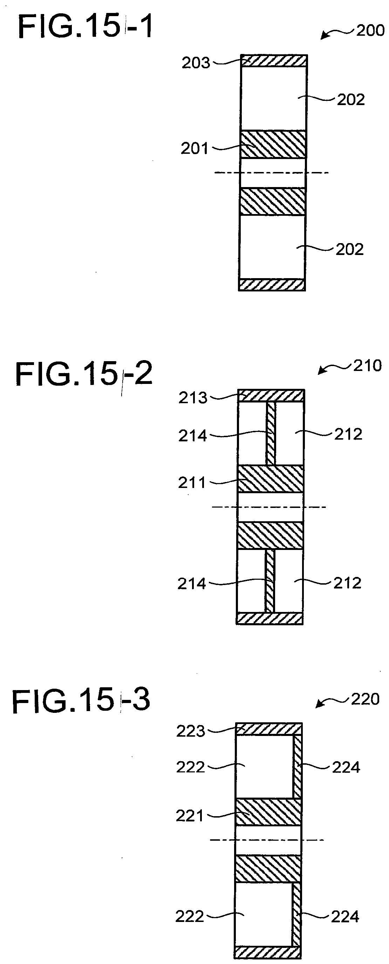

Hereinafter, a modified example of the impeller provided in the bubble generation chamber 151 will be described. FIG. 14 is a front view illustrating a first modified example of the impeller and FIGS. 15-1 to 15-3 are cross-sectional views illustrating the impeller.

As illustrated in FIGS. 14 and 15-1, an impeller 200 includes a boss portion 201, a plurality of vanes 202 which extend radially from the boss portion 201, and an outer race 203 disposed at the outside of the plurality of vanes 202. Further, as illustrated in FIGS. 14 and 15-2, an impeller 210 includes a boss portion 211, a plurality of vanes 212 which extend radially from the boss portion 211, an outer race 213 disposed at the outside of the plurality of vanes 212, and a plurality of support members 214 formed in a fan shape between the plurality of vanes 212. The support member 214 is a flat plate formed in a fan shape and extends in a rotation direction and a radial direction of the impeller 210, is used to connect the boss portion 211, the vane 212, and the outer race 213 to one another, and is disposed at an intermediate portion of the impeller 210 in a rotation axis direction. Further, as illustrated in FIGS. 14 and 15-3, an impeller 220 includes a boss portion 221, a plurality of vanes 222 which extend radially from the boss portion 221, an outer race 223 disposed at the outside of the plurality of vanes 222, and a support member 224 formed in a disc shape between the plurality of vanes 222. The support member 224 is a flat plate formed in a disc shape and extends in a rotation direction and a radial direction of the impeller 220, is used to connect the boss portion 221, the vane 222, and the outer race 223 to one another, and is disposed at one end portion of the impeller 220 in a rotation axis direction.

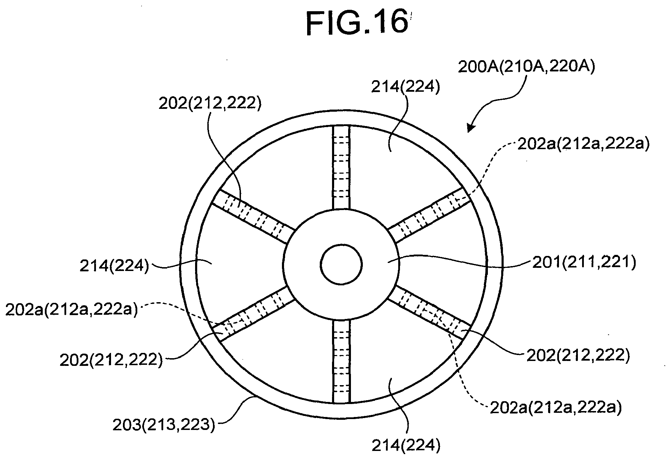

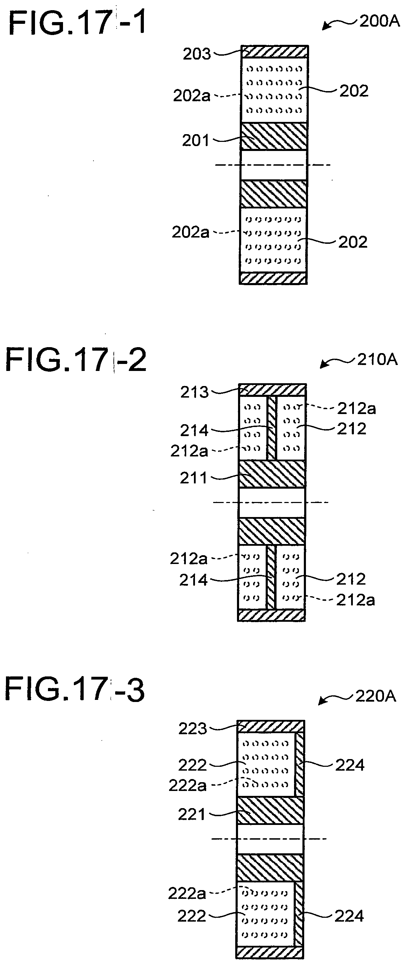

FIG. 16 is a front view illustrating a second modified example of the impeller and FIGS. 17-1 to 17-3 are cross-sectional views illustrating the impeller.

As illustrated in FIGS. 16 and 17-1, an impeller 200A includes the boss portion 201, the plurality of vanes 202, and the outer race 203 and each vane 202 is provided with a plurality of holes 202a. Further, as illustrated in FIGS. 16 and 17-2, an impeller 210A includes the boss portion 211, the plurality of vanes 212, the outer race 213, and the plurality of support members 214 and each vane 212 is provided with a plurality of holes 212a. Further, as illustrated in FIGS. 16 and 17-3, an impeller 220A includes the boss portion 221, the plurality of vanes 222, the outer race 223, and the support member 224 and each vane 222 is provided with a plurality of holes 222a.

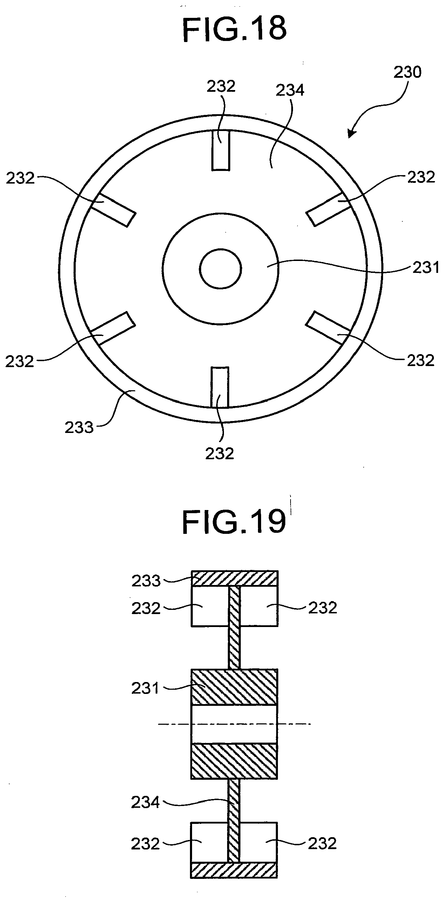

FIG. 18 is a front view illustrating a third modified example of the impeller and FIG. 19 is a cross-sectional view illustrating the impeller.

As illustrated in FIGS. 18 and 19, an impeller 230 includes a boss portion 231, a plurality of vanes 232, an outer race 233, and a support member 234. The support member 234 is a flat plate formed in a disc shape and extends in a rotation direction and a radial direction of the impeller 230, is used to connect the boss portion 231 and the outer race 233 to each other, and is disposed at an intermediate portion of the impeller 230 in a rotation axis direction. Then, the plurality of vanes 232 extend radially to be fixed to both faces of the support member 234 and contact the outer race 233 while a gap is ensured with respect to the boss portion 231.

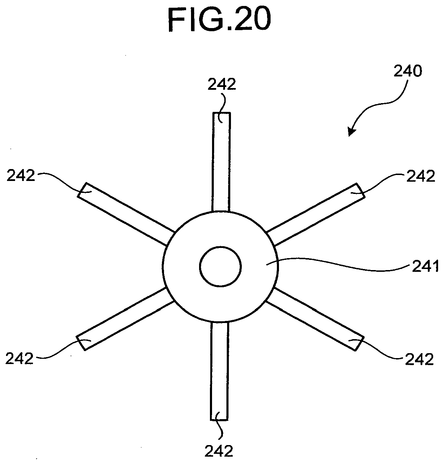

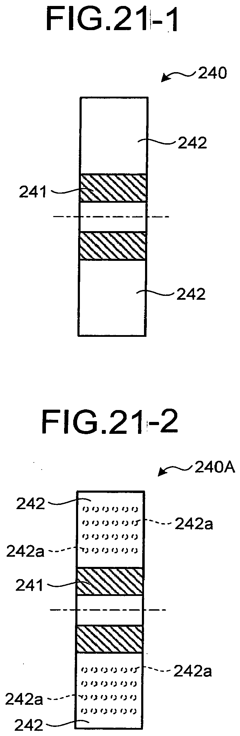

FIG. 20 is a front view illustrating a fourth modified example of the impeller and FIGS. 21-1 and 21-2 are cross-sectional views illustrating the impeller.

As illustrated in FIGS. 20 and 21-1, an impeller 240 includes a boss portion 241, a plurality of vanes 242, and an outer race 243. The plurality of vanes 242 extend radially from the boss portion 241 and the front end portions thereof are formed as free end portions. Further, as illustrated in FIG. 21-2, an impeller 240A includes the boss portion 241, the plurality of vanes 242, and the outer race 243 and each vane 242 is provided with a plurality of holes 242a.

Additionally, the configuration of each impeller is not limited to the above-described configuration and a combination of various configurations may be used.

In the above-described embodiments, the air blowing port is formed in an elongated elliptical shape, but the present invention is not limited to this shape. For example, an elongated circular shape, an oval shape, a rounded corner square shape, an elliptical shape, a square shape, a rhombic shape, a triangular shape, or the like may be employed.

### Reference Signs List

10 HULL
11 BOW
12 STERN
13 VESSEL BOTTOM
14 PORT (VESSEL SIDE PORTION)
15 STARBOARD (VESSEL SIDE PORTION)
21 AIR SUPPLY EQUIPMENT CHAMBER
27 VESSEL BOTTOM SHELL PLATE
28, 29 VESSEL SIDE SHELL PLATE
31, 101, 131, 141, 161 RESISTANCE REDUCTION DEVICE
32, 102, 142, 163 AIR SUPPLY DEVICE
33 AIR COOLER
34 VENTILATION CYLINDER
35 AIR SUCTION PORT
36, 37, 143 AIR BLOWING PORTION
38, 144 SEA WATER INTAKE PORTION
39 PUMP
41, 164 GAS CHAMBER
42, 153, 165 AIR BLOWING PORT
51, 52 FIRST GUIDE PLATE (GUIDE MEMBER)
111, 151 BUBBLE GENERATION CHAMBER
112 WATER INTAKE PASSAGE
113 AIR INTAKE PASSAGE
114, 200, 200A, 210, 210A, 220, 220A, 230, 240, 250 IMPELLER
115 BUBBLE SUPPLY PASSAGE
121, 201, 211, 221, 231, 241 BOSS PORTION
122, 202, 212, 222, 232, 242 VANE
123, 203, 213, 223, 234, 244 OUTER RACE
124 SHAFT PORTION
125 DRIVING MOTOR
152 WATER INTAKE OPENING
152a SECOND GUIDE PLATE
153a FIRST GUIDE PLATE
154 WEIR
214, 224, 234 SUPPORT MEMBER
A STAGNATION PORTION

## Claims

1. A vessel resistance reduction device (31) comprising:
a gas chamber (41) provided inside a hull (10);
a defining wall (27) which defines an inside of the gas chamber (41) and an outside of the hull (10);
an air blowing port (42) provided at the defining wall (27); and
a guide member, **characterized in that** said guide member is provided at a rear side of the hull (10) in the air blowing port (42),
wherein the guide member includes a first guide plate (51;52) provided near the gas chamber (41) in the defining wall (27) to block a part of the air blowing port (42),
wherein the first guide plate (51;52) is provided at an inner face of the defining wall (27) to block a stern side of the air blowing port (42),
wherein the first guide plate (51;52) is provided to block an area equal to or smaller than a half of an opening area of the air blowing port (42), and a space portion is formed between the rear end face (42a) of the air blowing port (42) and a lower face (51a) of the first guide plate (51;52).

2. The vessel resistance reduction device (31) according to claim 1,
wherein a plurality of the air blowing ports (42) are provided at a predetermined interval along a width direction (Y) of the hull (10) and the first guide plate (52) blocks a part of the plurality of air blowing ports (42).

3. The vessel resistance reduction device according to claim 1 or 2, further comprising:
an air supply device (102) which is configured to supply air into the gas chamber (41),
wherein the air supply device (102) includes a bubble generation chamber (111), a water intake passage (112) which is arranged to take water into the bubble generation chamber (111), an air intake passage (113) which is arranged to take air into the bubble generation chamber (111), an impeller (114) rotatable under the water of the bubble generation chamber (111), and a bubble supply passage (115) which is arranged to supply bubbles generated in the bubble generation chamber (111) to the gas chamber (41).

4. The vessel resistance reduction device (141) according to claim 3,
wherein the bubble generation chamber (151) which is the gas chamber is disposed at an inner face of the defining wall (27), a water intake opening (152) which is the water intake passage is formed at the defining wall (27), the air blowing port (153) which is the bubble supply passage is formed at the rear side of the hull (10) in relation to the water intake opening (152) in the defining wall (27), and
a weir (154) is provided under water at a position between the water intake opening (152) and a group of the impeller (114) and the air blowing port (153).

5. The vessel resistance reduction device (141) according to claim 4,
wherein the air blowing port (153) of the bubble supply passage is provided with a first guide plate (153a) which extends to be inclined downward in a bubble blowing direction.

6. The vessel resistance reduction device (141) according to claim 4 or 5,
wherein the water intake opening (152) of the water intake passage includes a second guide plate (152a) which extends to be inclined downward as it goes toward the front side of the hull (10).

7. The vessel resistance reduction device according to any one of claims 3 to 6,
wherein the impeller (114) includes a boss portion (121) and a plurality of vanes (122) which are disposed at the outside of the boss portion (121), one end of a horizontal shaft portion (124) is connected to the boss portion (121), and a driving motor (125) is connected to the shaft portion (124).

8. The vessel resistance reduction device according to claim 7,
wherein the impeller (114;200;210;220) includes the plurality of vanes (122;202;212;222) which extend radially from the boss portion (121;201;211;221) and an outer race (123;203;213;223) disposed at the outside of the plurality of vanes (122;202;212;222).

9. The vessel resistance reduction device according to claim 7,
wherein the impeller (210;220;230) includes a support member (214;224;234) that extends in a radial direction from the boss portion (211;221;231) and an outer race (213;223;233) disposed at the outside of the support member (214;224;234) and the support member (214;224;234) is provided with the plurality of vanes (212;222;232).

10. The vessel resistance reduction device according to any one of claims 7 to 9,
wherein the plurality of vanes (122;202;212;222) are provided with a plurality of holes (122a;202a;212a;222a) for further forming micro bubbles.

## Patentansprüche

1. Eine Wasserfahrzeug-Widerstandsreduktionsvorrichtung (31) mit:
einer Gaskammer (41), die im Inneren eines Schiffkörpers (10) vorgesehen ist,
einer Abgrenzungswand (27), die eine Innenseite der Gaskammer (41) und eine Außenseite des Schiffkörpers (10) definiert,
einem Luftblasanschluss (42), der an der Abgrenzungswand (27) vorgesehen ist, und
einem Leitelement,
**dadurch gekennzeichnet, dass** das Leitelement an einer Rückseite des Schiffkörpers (10) in dem Luftblasanschluss (42) vorgesehen ist,
wobei das Leitelement eine erste Leitplatte (51;52) aufweist, die nahe der Gaskammer (41) in der Abgrenzungswand (27) zum Blockieren eines Teils des Luftblasanschlusses (42) vorgesehen ist,
wobei die erste Leitplatte (51;52) an einer Innenfläche der Abgrenzungswand (27) zum Blockieren einer Heckseite des Luftblasanschlusses (42) vorgesehen ist,
wobei die erste Leitplatte (51;52) vorgesehen ist, um eine Fläche zu blockieren, die gleich oder kleiner ist als eine Hälfte einer Öffnungsfläche des Luftblasanschlusses (42), und ein Raumabschnitt zwischen der hinteren Endfläche (42a) des Luftblasanschlusses (42) und einer unteren Fläche (51a) der ersten Leitplatte (51;52) ausgebildet ist.

2. Die Wasserfahrzeug-Widerstandsreduktionsvorrichtung (31) gemäß Anspruch 1,
wobei eine Vielzahl der Luftblasanschlüsse (42) in einem vorbestimmten Intervall entlang einer Querrichtung (Y) des Schiffkörpers (10) vorgesehen ist und die erste Leitplatte (52) einen Teil der Vielzahl von Luftblasanschlüssen (42) blockiert.

3. Die Wasserfahrzeug-Widerstandsreduktionsvorrichtung gemäß Anspruch 1 oder 2, ferner mit:
einer Luftzuführvorrichtung (102), die konfiguriert ist, um Luft in die Gaskammer (41) zuzuführen,
wobei die Luftzuführvorrichtung (102) eine Blasenerzeugungskammer (111), einen Wassereinlassdurchgang (112), der angeordnet ist, um Wasser in die Blasenerzeugungskammer (111) aufzunehmen, einen Lufteinlassdurchgang (113), der angeordnet ist, um Luft in die Blasenerzeugungskammer (111) aufzunehmen, ein Flügelrad (114), das unter dem Wasser der Blasenerzeugungskammer (111) drehbar ist, und einen Blasenzuführdurchgang (115), der angeordnet ist, um in der Blasenerzeugungskammer (111) erzeugte Blasen zu der Gaskammer (41) zuzuführen, aufweist.

4. Die Wasserfahrzeug-Widerstandsreduktionsvorrichtung (141) gemäß Anspruch 3,
wobei die Blasenerzeugungskammer (151), die die Gaskammer ist, an einer Innenfläche der Abgrenzungswand (27) angeordnet ist, eine Wassereinlassöffnung (152), die der Wassereinlassdurchgang ist, an der Abgrenzungswand (27) ausgebildet ist, der Luftblasanschluss (153), der der Blasenzuführdurchgang ist, an der Rückseite des Schiffkörpers (10) in Relation zu der Wassereinlassöffnung (152) in der Abgrenzungswand (27) ausgebildet ist, und
ein Damm bzw. eine Überlaufplatte (154) unter Wasser an einer Position zwischen der Wassereinlassöffnung (152) und einer Gruppe aus dem Flügelrad (114) und dem Luftausblasanschluss (153) vorgesehen ist.

5. Die Wasserfahrzeug-Widerstandsreduktionsvorrichtung (141) gemäß Anspruch 4,
wobei der Luftblasanschluss (153) des Blasenzuführdurchgangs mit einer ersten Leitplatte (153a) versehen ist, die sich nach unten geneigt in einer Blasenblasrichtung erstreckt.

6. Die Wasserfahrzeug-Widerstandsreduktionsvorrichtung (141) gemäß Anspruch 4 oder 5,
wobei die Wassereinlassöffnung (152) des Wassereinlassdurchgangs eine zweite Leitplatte (152a) aufweist, die sich nach unten geneigt erstreckt, wenn sie zu der Vorderseite des Schiffkörpers (10) verläuft.

7. Die Wasserfahrzeug-Widerstandsreduktionsvorrichtung gemäß einem der Ansprüche 3 bis 6,
wobei das Flügelrad (114) einen Nabenabschnitt (121) und eine Vielzahl von Flügeln (122) aufweist, die an der Außenseite des Nabenabschnitts (121) angeordnet sind, wobei ein Ende eines horizontalen Schaftabschnitts (124) mit dem Nabenabschnitt (121) verbunden ist, und ein Antriebsmotor (125) mit dem Schaftabschnitt (124) verbunden ist.

8. Die Wasserfahrzeug-Widerstandsreduktionsvorrichtung gemäß Anspruch 7,
wobei das Flügelrad (114;200;210;220) die Vielzahl von Flügeln (122;202;212;222), die sich radial von dem Nabenabschnitt (121;201;211,221) erstrecken, und einen äußeren Laufring (123;203;213;223), der an der Außenseite der Vielzahl von Flügeln (122;202;212;222) angeordnet ist, aufweist.

9. Die Wasserfahrzeug-Widerstandsreduktionsvorrichtung gemäß Anspruch 7,
wobei das Flügelrad (210;220;230) ein Tragelement (214;224;234), das sich in einer Radialrichtung von dem Nabenabschnitt (211;221;231) erstreckt, und einen äußeren Laufring (213;223;233), der an der Außenseite des Tragelements (214;224;234) angeordnet ist, aufweist, und das Tragelement (214;224;234) mit der Vielzahl von Flügeln (212;222;232) versehen ist.

10. Die Wasserfahrzeug-Widerstandsreduktionsvorrichtung gemäß einem der Ansprüche 7 bis 9,
wobei die Vielzahl von Flügeln (122;202;212;222) mit einer Vielzahl von Löchern (122a;202a;212a;222a) zum weiteren Ausbilden von Mikroblasen versehen sind.

## Revendications

1. Dispositif (31) de réduction de la résistance pour un navire comprenant :
une chambre (41) pour du gaz prévue à l'intérieur d'une coque (10) ;
une paroi (27) de définition, qui définit un intérieur de la chambre (41) pour du gaz et un extérieur de la coque (10) ;
Un orifice (42) d'insufflation d'air prévu dans la paroi (27) de définition ; et
un élément de guidage, **caractérisé en ce que** l'élément de guidage est prévu à un côté arrière de la coque (10) dans l'orifice (42) d'insufflation d'air,
dans lequel l'élément de guidage comprend une première plaque (51;52) de guidage prévue près de la chambre (41) pour du gaz dans la paroi (27) de définition pour fermer une partie de l'orifice (42) d'insufflation d'air,
dans lequel la première plaque (51;52)de guidage est prévue à une face intérieure de la paroi (27) de définition pour fermer un côté arrière de l'orifice (42) d'insufflation d'air,
dans lequel la première plaque (51;52)de guidage est prévue pour fermer une surface inférieure ou égale à une moitié d'une surface d'ouverture de l'orifice (42) d'insufflation d'air, et une partie d'espace est formée entre la face (42a) d'extrémité arrière de l'orifice (42) d'insufflation d'air et une face (51a) inférieure de la première plaque (51 ;52)de guidage.

2. Dispositif (31) de réduction de la résistance pour un navire suivant la revendication 1,
dans lequel il est prévu une pluralité d'orifices (42) d'insufflation d'air à un intervalle déterminé à l'avance dans une direction Y en largeur de la coque (10) et la première plaque (52) de guidage ferme une partie de la pluralité des orifices (42) d'insufflation d'air.

3. Dispositif de réduction de la résistance pour un navire suivant la revendication 1 ou 2, comprenant en outre :
un dispositif (102) d'alimentation en air, qui est configuré pour envoyer de l'air dans la chambre (41) pour du gaz.
dans lequel le dispositif (102) d'alimentation en air comprend une chambre (111) de production de bulles, un passage (112) d'admission d'eau, qui est agencé pour faire aller de l'eau dans la chambre (111) de production de bulles, un passage (113) d'admission d'air, qui est agencé pour faire aller de l'air dans la chambre (111) de production de bulles, une hélice (114) pouvant tourner sous l'eau de la chambre (111) de production de bulles, et un passage (115) d'alimentation en bulles, qui est agencé pour fournir des bulles produites dans la chambre (111) de production de bulles à la chambre (41) pour du gaz.

4. Dispositif (141) de réduction de la résistance pour un navire suivant la revendication 3,
dans lequel la chambre (151) de production de bulles, qui est la chambre pour du gaz, est disposée à une face intérieure de la paroi (27) de définition, une ouverture (152) d'admission d'eau, qui est le passage d'admission d'eau, est formée dans la paroi (27) de définition, l'orifice (153) d'insufflation d'air, qui est le passage d'alimentation en bulles, est formé du côté arrière de la coque (10) par rapport à l'ouverture (152) d'admission d'eau dans la paroi (27) de définition, et
un déversoir (154) est prévu sous l'eau en une position entre l'ouverture (152) d'admission d'eau et un groupe composé de l'hélice (114) et de l'orifice (153) d'insufflation d'air.

5. Dispositif (141) de réduction de la résistance pour un navire suivant la revendication 4,
dans lequel l'orifice (153) d'insufflation d'air du passage d'alimentation en bulles est pourvu d'une première plaque ((153a) de guidage qui s'étend en étant inclinée vers le bas dans la direction d'insufflation de bulles.

6. Dispositif (141) de réduction de la résistance pour un navire suivant la revendication 4 ou 5,
dans lequel l'ouverture (152) d'admission d'eau du passage d'admission d'eau comprend une deuxième plaque (152a) de guidage qui s'étend en étant inclinée vers le bas, alors qu'elle va vers le côté avant de la coque (10).

7. Dispositif de réduction de la résistance suivant l'une quelconque des revendications 3 à 6,
dans lequel l'hélice (114) comprend une partie (121) de moyeu et une pluralité d'aubes (122), qui sont disposés à l'extérieur de la partie (121) de moyeu, une extrémité d'une partie (124) d'arbre horizontal est reliée à la partie (121) de moyeu et un moteur (125) d'entraînement est relié à la partie (124) d'arbre.

8. Dispositif de réduction de la résistance suivant la revendication 7,
dans lequel l'hélice (114;200;210;220) comprend la pluralité d'aubes (122;202;212;222) qui s'étendent radialement à partir de la partie (121;201;211;221) de moyeu et un anneau (123;203;213;223) extérieur disposé à l'extérieur de la pluralité d'aubes (122;202;212;222).

9. Dispositif de réduction de la résistance suivant la revendication 7,
dans lequel l'hélice (210;220;230) comprend un élément (214;224;234) de support qui s'étend dans une direction radiale à partir de la partie (211;221;231) de moyeu et un anneau (213;223;233) extérieur disposé à l'extérieur de l'élément (214;224;234) de support et l'élément (214;224;234) de support est pourvu d'une pluralité d'aubes (212;222;232).

10. Dispositif de réduction de la résistance suivant l'une quelconque des revendications 7 à 9,
dans lequel la pluralité d'aubes (122 ;202 ;212 ;222) sont pourvues d'une pluralité de trous (122a ;202a ;212a ;222a) pour former davantage de micro bulles.
